# EUROPEAN PATENT APPLICATION

(11) **EP 4 567 642 A1**
(43) Date of publication of application: **11.06.2025**
(21) Application number: 24212622.5
(22) Date of filing: 13.11.2024
(51) Int. Cl.: G06F 21/10, G06F 21/30, G06F 21/60, G06F 21/64, H04L 9/32, H04L 9/40, H04W 12/06, H04W 12/10

(54) **CONTENT ORIGIN VERIFYING SYSTEM THAT ALSO ALLOWS THIRD PARTY TO ACCURATELY ASCERTAIN AUTHENTICITY OF DIGITAL SIGNATURE, CONTROL METHOD FOR CONTENT ORIGIN VERIFYING SYSTEM, AND STORAGE MEDIUM**

(30) Priority: 05.12.2023 JP 2023205196
(71) Applicant: CANON KABUSHIKI KAISHA, Tokyo 146-8501 (JP)
(72) Inventor: KUBO, Keiichiro, Tokyo, 146-8501 (JP)
(74) Representative: TBK

(57) **Abstract**

A content origin verifying system that also allows a third party to accurately ascertain the authenticity of a digital signature is provided. The content origin verifying system (1000) includes a digital camera (101) and a content receiving server (102). The digital camera includes a first digital signature generating unit (213) that generates a first digital signature based on a first private key. The content receiving server includes a digital signature verifying unit (402) that verifies the authenticity of the first digital signature, and a second digital signature generating unit (404) that, in the case of being verified that the first digital signature is true, generates a second digital signature based on a second private key. The second private key is paired with a public key for which a public key certificate is issued by a certification authority and which is capable of being used to verify the authenticity of the second digital signature.

## Description

### BACKGROUND OF THE INVENTION

### Field of the Invention

The present invention relates to a content origin verifying system, a control method for the content origin verifying system, and a storage medium.

### Description of the Related Art

In recent years, information sharing via social networking services (SNS) and the like has become more prevalent, and anyone is able to view and transmit this shared information. In addition, with the evolution of digital image processing technology, the emergence of image generation technology that uses artificial intelligence (AI) to generate digital images that look like real photographs, and the like, it is becoming more difficult for viewers to verify the authenticity of digital images. For this reason, there is an increasing demand for a mechanism to guarantee the authenticity of a digital image photographed by a digital camera, that is, to guarantee that a digital image photographed by a digital camera has not been altered or falsified. As a means (a method) to guarantee that a digital image has not been falsified, there is encryption with a digital signature. For example, Japanese Unexamined Patent Application Publication (Translation of PCT Application) No. 2002-542523 has disclosed a technique that associates a digital image photographed by a digital camera with a digital signature. The digital signature is generated by encrypting the digital image data with a private key. In addition, in order to guarantee that the digital image has not been falsified, each individual digital camera must have its own private key. In the case that each private key is leaked, there is a risk that the digital image may be falsified or an identity may be stolen, and therefore, it is preferable that each private key is protected by highly secure hardware that restricts reading or overwriting from the outside. In addition, in order to certify the identity of a signer of a digital signature, the digital signature is generally managed together with a certificate issued by an organization called "a certification authority". The certificate is issued with respect to a public key for verifying the authenticity of the digital signature, and is called "a public key certificate".

However, a public key certificate generally has a validity period, and therefore, in the case that a public key whose public key certificate's validity period has expired and a private key that is paired with the public key have been used, there is a risk that the function (ability) to guarantee the identity of the signer will be lost.

### SUMMARY OF THE INVENTION

The present invention provides a content origin verifying system that also allows a third party to accurately ascertain the authenticity of a digital signature, a control method for the content origin verifying system, and a storage medium.

Accordingly, a first aspect of the present invention provides a content origin verifying system as specified in claims 1 to 16.

Accordingly, a second aspect of the present invention provides a control method for controlling a content origin verifying system as specified in claim 17.

Accordingly, a third aspect of the present invention provides a non-transitory computer-readable storage medium as specified in claim 18.

According to the present invention, the third party is also able to accurately ascertain the authenticity of the digital signature.

Further features of the present invention will become apparent from the following description of exemplary embodiments with reference to the attached drawings.

### BRIEF DESCRIPTION OF THE DRAWINGS

FIG. 1 is a schematic diagram that shows an example of a configuration of a content origin verifying system.
FIG. 2 is a block diagram that shows a configuration of a digital camera.
FIG. 3 is a flowchart that shows a processing of generating an image file with a camera digital signature, which is executed in the digital camera.
FIG. 4 is a block diagram that shows a configuration of a content receiving server.
FIG. 5 is a diagram that shows an example in which a digital signature and a public key certificate are assigned to a digital content by the content receiving server.
FIG. 6 is a flowchart that shows a content origin verifying processing, which verifies that a digital content posted on an SNS has not been falsified.
FIG. 7 is a diagram that shows an example of a content origin verifying web page.

### DESCRIPTION OF THE EMBODIMENTS

The present invention will now be described in detail below with reference to the accompanying drawings showing embodiments thereof.

Hereinafter, a preferred embodiment of the present invention will be described in detail with reference to the drawings. However, the configuration described in the following preferred embodiment is merely an example, and the scope of the present invention is not limited by the configuration described in the following preferred embodiment. For example, each unit (each component) constituting the present invention is able to be replaced with a unit (a component) with any configuration that is capable of performing the same function. In addition, any component(s) may be added.

### <Configuration of content origin verifying system and processing executed in content origin verifying system>

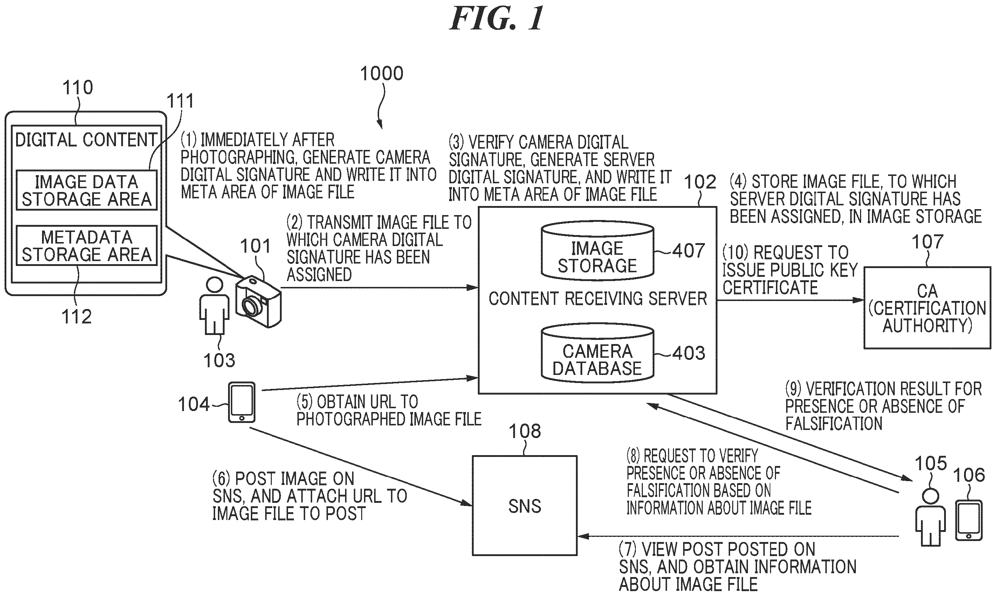

FIG. 1 is a schematic diagram that shows an example of a configuration of a content origin verifying system. As shown in FIG. 1, a content origin verifying system 1000 includes a digital camera 101, which is a content generating apparatus, and a content receiving server (a server) 102 that is communicably connected to the digital camera 101. The digital camera 101 is able to generate a photographed image as a digital content 110 by performing photographing with the digital camera 101. The content receiving server 102 is able to receive the digital content 110 generated by the digital camera 101. The content origin verifying system 1000 is a system that certifies (verifies) the origin of the digital content 110. It should be noted that in the present embodiment, the content generating apparatus is the digital camera 101, but is not limited to the digital camera 101. For example, the content generating apparatus may be an apparatus that generates audio data of recorded audio, an apparatus that generates image data such as digitally-drawn illustration images, an apparatus that generates data for composed music, or the like. In addition, a smartphone 104, a smartphone 106, and a certification authority (a CA) 107 are communicably connected to the content receiving server 102. In addition, the smartphone 104 and the smartphone 106 are each communicably connected to a social networking service (an SNS) 108. The user of the digital camera 101 and the smartphone 104 is a photographer 103 who performs photographing with the digital camera 10. The user of the smartphone 106 is a viewer 105 who views the photographed image photographed by the digital camera 101.

### (1) Immediately after photographing, generate camera digital signature and write it into meta area of image file

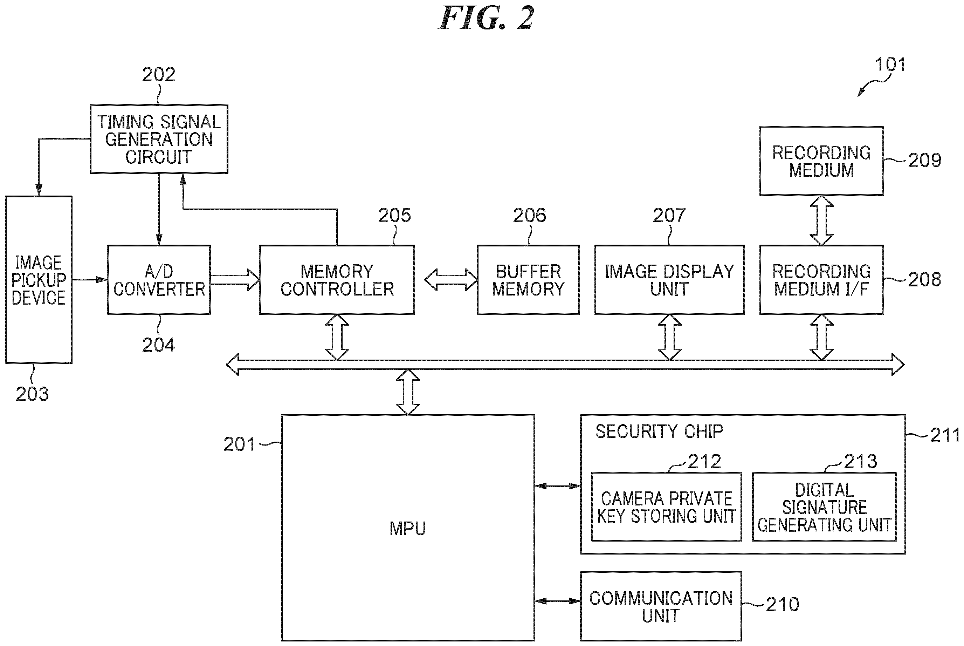

As shown in FIG. 1, the photographer 103 operates the digital camera 101 to perform photographing. As a result, the digital content 110 is obtained. The digital content 110 is an image file that includes an image data storage area 111, in which data of the photographed image is stored, and a metadata storage area 112, in which metadata is stored. The metadata storage area 112 is able to store data that conforms to, for example, the exchangeable image file format (Exif) standard, or the like. In addition, in the digital camera 101, a digital signature generating unit (a first digital signature generating unit) 213 (see FIG. 2) generates a first digital signature with respect to the digital content 110 immediately after photographing (a first digital signature generating step). The first digital signature is associated with the digital content 110. In addition, the generation of the first digital signature is performed based on a first private key (a first signature key), and a first hash value (a hash value) that is calculated (obtained) from the digital content 110. Specifically, the first digital signature is generated by encrypting the first hash value with the first private key. In the case that the first private key is leaked to the outside, since there is a risk that leads to identity theft, the first private key has a high level of confidentiality. The first private key is stored in a tamper-resistant camera private key storing unit (a tamper-resistant storing unit) 212 (see FIG. 2). In the present embodiment, the first private key used for the first digital signature is sometimes referred to as "a camera private key", and the first digital signature is sometimes referred to as "a camera digital signature".

Next, the digital signature generating unit 213 stores the camera digital signature (the first digital signature) as metadata in the metadata storage area 112. As a result, the digital content 110 becomes in a state in which the camera digital signature has been assigned to the digital content 110 (hereinafter, referred to as "a camera digital signature assigned state"). It should be noted that when calculating the first hash value based on the digital content 110, it is preferable to exclude the metadata storage area 112 in advance from the first hash value calculation target. In addition, in the present embodiment, the camera digital signature is stored in the metadata storage area 112 of the digital content 110, but the present invention is not limited to this, and for example, the camera digital signature may be stored in a file separate from the digital content 110. In this case, in the next step (a transmitting step), it is preferable to transmit the digital content 110 and the separate file to the content receiving server 102 in association with each other. In addition, the function of generating the camera digital signature at the moment of photographing and storing the camera digital signature in the metadata storage area 112 is switched and becomes enabled by the photographer 103 operating a photographing setting menu of the digital camera 101.

### (2) Transmit image file to which camera digital signature has been assigned

The digital camera 101 transmits the digital content 110 (the image file) in the camera digital signature assigned state to the content receiving server 102 via a communication unit (a transmitting unit) 210 (see FIG. 2) (the transmitting step). This transmission uses a file transfer protocol (FTP).

### (3) Verify camera digital signature, generate server digital signature, and write it into meta area of image file

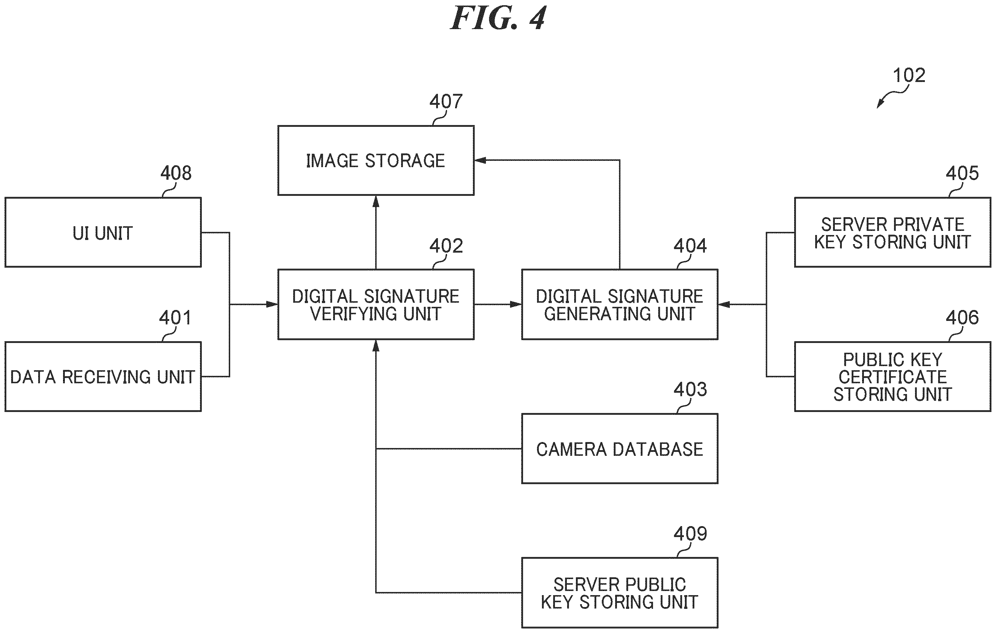

The content receiving server 102 receives the digital content 110 in the camera digital signature assigned state, which has been transmitted from the communication unit 210 of the digital camera 101, via a data receiving unit (a receiving unit) 401 (see FIG. 4) (a receiving step).

Next, in the content receiving server 102, a digital signature verifying unit (a verifying unit) 402 (see FIG. 4) verifies the authenticity of the camera digital signature of the digital content 110 that has been received by the data receiving unit 401 (a verifying step). This verification will be described. In the content receiving server 102, a serial number serving as an identifier capable of identifying the digital camera 101 and a first public key (a first verification key) for verifying the camera digital signature are linked to each other and stored in a camera database (a storing unit) 403. In addition, the serial number is also stored as the metadata in the metadata storage area 112 (the digital content 110). The first public key is able to be used by an unspecified number of people to verify the camera digital signature. In the present embodiment, the first public key used to verify the camera digital signature is sometimes referred to as "a camera public key". The digital signature verifying unit 402 obtains the serial number from the digital content 110 that has been received in the receiving step. Then, the digital signature verifying unit 402 obtains from the camera database 403 a camera public key that has been linked to the same serial number as the obtained serial number. The digital signature verifying unit 402 performs the verification of the authenticity of the camera digital signature by using the obtained camera public key.

As described above, the first digital signature is obtained by encrypting the first hash value, which has been calculated based on the digital content 110, with the camera private key. The camera private key is paired with the camera public key. As a result, it is possible to correctly decrypt the first digital signature only with the camera public key. This decryption results in obtaining the hash value. In addition, the digital signature verifying unit 402 calculates a hash value (a first hash value) based on the digital content 110 that has been received in the receiving step, in the same manner as the first hash value calculation in the digital camera 101. The digital signature verifying unit 402 is able to verify the presence or absence of the authenticity of the camera digital signature based on whether or not the respective hash values match each other, that is, based on whether or not the hash value obtained by the decryption matches the hash value obtained from the digital content 110. Specifically, in the case that the respective hash values match each other, it is possible to verify that the camera digital signature is authentic (the camera digital signature is true). Furthermore, by having been verified that the camera digital signature is authentic, it is possible to determine that the digital content 110 after the camera digital signature has been generated by the digital camera 101 has not been altered or falsified. On the other hand, in the case that the respective hash values do not match each other, it is possible to verify that the camera digital signature is not authentic (the camera digital signature is fake). In this case, it is possible to determine that the digital content 110 after the camera digital signature has been generated by the digital camera 101 has been altered or falsified.

As a result of the verification performed by the digital signature verifying unit 402, in the case of having been verified that the first digital signature is true (authentic), a digital signature generating unit (a second digital signature generating unit) 404 (see FIG. 4) generates a second digital signature (a second digital signature generating step). Similar to the first digital signature, the second digital signature is associated with the digital content 110. In addition, the generation of the second digital signature is performed based on a second private key (a second signature key), and a second hash value that is calculated based on the digital content 110. Specifically, the second digital signature is generated by encrypting the second hash value with the second private key. Similar to the first private key, the second private key also has a high level of confidentiality. The second private key is stored in the tamper-resistant camera database 403. In the present embodiment, the second private key used for the second digital signature is sometimes referred to as "a server private key", and the second digital signature is sometimes referred to as "a server digital signature".

Next, the digital signature generating unit 404 stores the server digital signature (the second digital signature) as the metadata in the metadata storage area 112. As a result, the digital content 110 becomes in a state in which the server digital signature has been assigned to the digital content 110 (hereinafter, referred to as "a server digital signature assigned state"). It should be noted that when calculating the second hash value based on the digital content 110, it is preferable to exclude the metadata storage area 112 in advance from the second hash value calculation target, and it is preferable to include the camera digital signature in the second hash value calculation target. The server private key (the second private key) used for the server digital signature is paired with a public key (a second public key) that is capable of being used to verify the authenticity of the server digital signature. In the present embodiment, this public key is sometimes referred to as "a server public key". In addition, a public key certificate has been issued by the CA 107 with respect to the server public key. The digital signature generating unit 404 stores the public key certificate as the metadata in the metadata storage area 112. The public key certificate is generally issued by the CA 107 in response to an issuance request from a legitimate corporation that manufactures or sells the digital camera 101. The manufacturer of the digital camera 101 obtains the public key certificate that has been issued by the CA 107. "The public key certificate" certifies that the server public key associated with the public key certificate is a public key which has been set by the legitimate corporation. Such a public key certificate enables a third party, such as the viewer 105, to determine that the server public key is a public key which has been set by the legitimate corporation. On the other hand, when a public key has not been associated with the public key certificate, it is determined that it is unclear whether or not the public key is a public key which has been set by the legitimate corporation. It should be noted that a time stamp certificate may be issued with respect to the digital content 110 in the server digital signature assigned state. "The time stamp certificate" is a certificate issued by a time certification authority to certify that the digital content 110 exists at a certain time and that the digital content 110 has not been falsified. Generally, a public key certificate issued by the CA 107 has a validity period of one year, whereas a time stamp certificate issued by the time certification authority has a validity period of ten years. The times tamp certificate certifies for a period of ten years that at the certain time, the digital content 110 with a valid public key certificate, which is in the server digital signature assigned state, exists. In this way, the time stamp certificate is an effective means for certifying an identity of a signer of the digital signature even with respect to the digital content 110 whose public key certificate's validity period has expired.

### (4) Store image file, to which server digital signature has been assigned, in image storage

The digital content 110, to which the camera digital signature and the server digital signature have been assigned, is stored in an image storage 407 (see FIG. 4) of the content receiving server 102.

### (5) Obtain URL to photographed image file

A uniform resource locator (a URL) has been assigned to the digital content 110 that has been stored in the image storage 407. The photographer 103 or the third party such as the viewer 105 is able to use this URL to view or download the digital content 110.

### (6) Post image on SNS, and attach URL to image file to post

The photographer 103 uses the URL, which has been assigned to the digital content 110 that has been stored in the image storage 407, to download the digital content 110 to his or her own smartphone 104. Thereafter, the photographer 103 posts the digital content 110, which has been downloaded to the smartphone 104, on the SNS 108 or the like. At this time, the photographer 103 is able to include, in a text when posting on the SNS 108, a download URL from which the third party is able to download the digital content 110. The viewer 105 who is the third party is able to use this download URL to download the digital content 110.

### (7) View post posted on SNS, and obtain information about image file

The viewer 105 is using his or her own smartphone 106 to view the photographed image of the digital content 110 posted by the photographer 103 on the SNS 108 in (6) described above. The viewer 105 is able to compare the photographed image being viewed with the photographed image of the digital content 110 that has been downloaded in (5) described above. As a result of this comparison, similar to the photographed image of the digital content 110 that has been downloaded in (5) described above, it is possible to easily visually confirm that falsification such as changing or editing has not been made from the time of photographing with respect to the photographed image being viewed. In addition, the viewer 105 is able to obtain information about the digital content 110 that he or she wishes to confirm by copying the URL of the digital content 110 or downloading the digital content 110.

### (8) Request to verify presence or absence of falsification based on information about image file

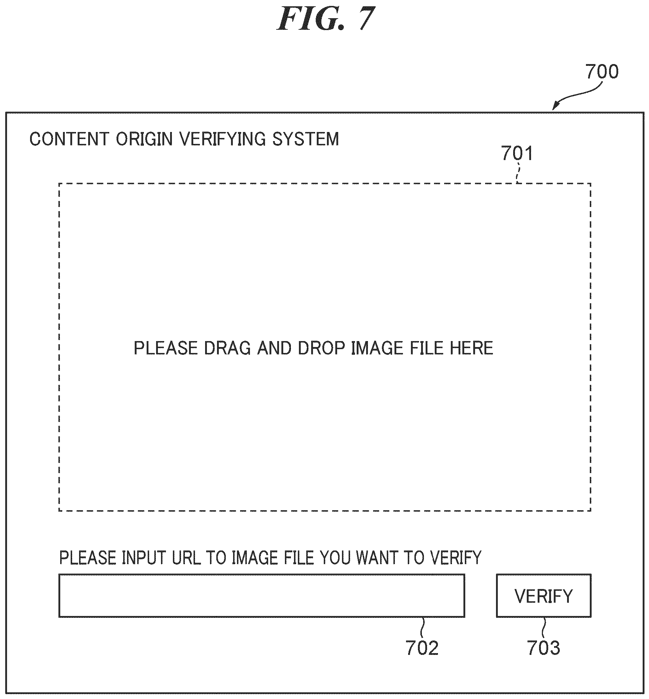

The content receiving server 102 is configured to be able to provide a content origin verifying web page (an image) that is capable of being used to certify (verify) the origin of the digital content 110, or a URL (an address) of the content origin verifying web page. In addition, it is assumed here that the viewer 105 has obtained, from the SNS 108, the download URL of the digital content 110 posted by the photographer 103 on the SNS 108, or the digital content 110 itself that is a verification target of the presence or absence of falsification. The viewer 105 uses the smartphone 106 to search for the URL of the content origin verifying web page, for example, by web search or the like, and then accesses the URL of the content origin verifying web page. As a result, a content origin verifying web page 700 (see FIG. 7) is displayed on the smartphone 106. The content origin verifying web page 700 includes a user interface section (a UI section) 701 and a UI section 702. The UI section 701 is a section where the digital content 110 is able to be dragged and dropped. The UI section 702 is a section where the download URL of the digital content 110 is able to be inputted. By using such a content origin verifying web page 700, the viewer 105 is able to designate, in the content receiving server 102, the digital content 110 that is the verification target of the presence or absence of falsification. It should be noted that the content origin verifying web page 700 will be described below with reference to FIG. 7.

### (9) Verification result for presence or absence of falsification

As described above, the viewer 105 is able to drag and drop the digital content 110 that is the verification target of the presence or absence of falsification onto the UI section 701 of the content origin verifying web page 700. In this case, the digital signature verifying unit 402 of the content receiving server 102 performs the verification of the authenticity of the server digital signature and the camera digital signature that are included in the digital content 110. The server digital signature is obtained by encrypting the second hash value, which has been calculated based on the digital content 110, with the server private key. The server private key is paired with the server public key. As a result, it is possible to correctly decrypt the server digital signature only with the server public key. This decryption results in obtaining the hash value. In addition, the digital signature verifying unit 402 calculates the hash value (the second hash value) based on the digital content 110. The digital signature verifying unit 402 is able to verify the presence or absence of the authenticity of the server digital signature based on whether or not the respective hash values match each other, that is, based on whether or not the hash value obtained by the decryption matches the hash value obtained from the digital content 110. Specifically, in the case that the respective hash values match each other, it is possible to verify that the server digital signature is authentic (the server digital signature is true). On the other hand, in the case that the respective hash values do not match each other, it is possible to verify that the server digital signature is not authentic (the server digital signature is fake). After verifying the server digital signature, the digital signature verifying unit 402 performs the verification of the camera digital signature. The verification of the camera digital signature is as described above. Then, the verification result of the server digital signature and the verification result of the camera digital signature are displayed on the UI section 701 of the content origin verifying web page 700, respectively. As a result, the viewer 105 is able to confirm each of the verification results, and therefore, is able to accurately ascertain the presence or absence of the authenticity of each of the digital signatures. Then, in the case that each of the digital signatures is authentic, it is possible to determine that the digital content 110 has not been falsified since the digital content 110 has been generated till now.

In addition, the viewer 105 is also able to designate, in the UI section 702 of the content origin verifying web page 700, the download URL of the digital content 110. In this case, the content receiving server 102 confirms that the download URL is the download URL of the digital content 110 that has been stored in the image storage 407. After this confirmation, the content receiving server 102 performs control to display the photographed image of the digital content 110 on the content origin verifying web page 700 (for example, the UI section 701). As a result, the viewer 105 is able to visually compare the photographed image from the SNS 108 being viewed with the photographed image displayed on the content origin verifying web page 700. This makes it possible to confirm the presence or absence of falsification of the photographed image from the SNS 108 after it has been photographed by the digital camera 101. It should be noted that in the case that the viewer 105 has designated an invalid URL different from the download URL of the digital content 110 in the UI section 702 of the content origin verifying web page 700, the gist of that is displayed on the content origin verifying web page 700.

### (10) Request to issue public key certificate

The content receiving server 102 monitors the digital content 110 that has been stored in the image storage 407. In addition, in the case that the validity period of the public key certificate linked to the server digital signature which has been assigned to the digital content 110 is approaching, the content receiving server 102 sets a new server private key and a new server public key that are paired with each other. In addition, the content receiving server 102 transmits the new server private key and the new server public key to the CA 107 and requests the CA 107 to issue a new public key certificate for the new server private key, that is, to reissue the public key certificate. In the case that the new public key certificate has been issued, in the content receiving server 102, the server digital signature for the digital content 110 is performed again. It should be noted that when the server digital signature has been performed again, an email address or the like linked to a user account of the photographer 103 who has photographed the photographed image of the digital content 110 may be notified. In addition, in the case that the photographer 103 has received this notification, he or she is able to, for example, re-upload the digital content 110 that he or she has posted on the SNS 108.

### <Configuration of digital camera>

FIG. 2 is a block diagram that shows a configuration of the digital camera. As shown in FIG. 2, the digital camera 101 includes an MPU (a computer) 201, a timing signal generation circuit 202, an image pickup device 203, an A/D converter 204, a memory controller 205, a buffer memory 206, and an image display unit 207. In addition, the digital camera 101 includes a recording medium I/F 208, a recording medium 209, a communication unit 210, and a security chip 211. The MPU 201 is a microcontroller for performing control for the system of the digital camera 101, such as the photographing sequence. The timing signal generation circuit 202 generates a timing signal required to operate the image pickup device 203. The image pickup device 203 is configured with, for example, a CCD image sensor or a CMOS image sensor, converts reflected light from a subject into electrical signals (analog image data), and reads it out to the A/D converter 204. The A/D converter 204 converts the analog image data read out from the image pickup device 203 into digital image data (hereinafter, simply referred to as "image data"). The memory controller 205 controls reading and writing of an image file such as the digital content 110 from and to the buffer memory 206, as well as the refreshing operation of the buffer memory 206. This image file has metadata (for example, Exif data) generated by the MPU 201 added thereto. The buffer memory 206 stores the image file. The image display unit 207 displays the image of the image file that has been stored in the buffer memory 206.

The recording medium I/F 208 is an interface for controlling reading and writing of data from and to the recording medium 209. The recording medium 209 is a recording medium, for example, a memory card or the like that is capable of being inserted into and extracted from the digital camera 101, and stores programs, image files, etc. It should be noted that the programs include, for example, programs for causing to execute the respective units of the content origin verifying system 1000 and the respective means of the content origin verifying system 1000 (a control method for the content origin verifying system). In addition, these programs are not limited to being stored in the digital camera 101, but may be stored, for example, in the content receiving server 102, or may be stored in a distributed manner in the digital camera 101 and the content receiving server 102. The communication unit 210 is connected to the Internet (not shown) and transmits and receives data to and from external apparatuses such as the content receiving server 102. In the content origin verifying system 1000, the communication unit 210 is able to transmit the digital content 110 to the content receiving server 102. The security chip 211 is tamper-resistant hardware, and includes the camera private key storing unit 212 and the digital signature generating unit 213. The camera private key storing unit 212 stores the camera private key used for the camera digital signature. The digital signature generating unit 213 generates the camera digital signature. By providing the digital signature generating unit 213 in the security chip 211, it is possible to perform a camera digital signature generation processing without releasing the camera private key outside the security chip 211. In addition, it is possible to reduce the risk of the camera private key being leaked.

### <Processing of generating image file with camera digital signature, which is executed in digital camera>

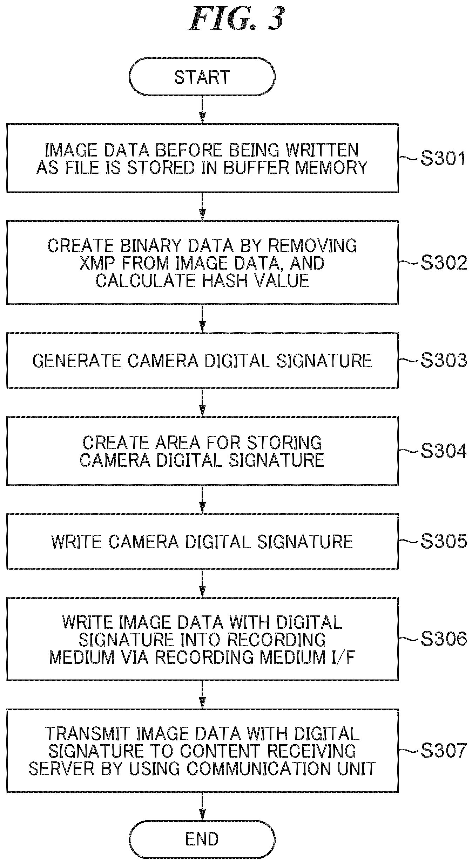

FIG. 3 is a flowchart that shows a processing of generating an image file with a camera digital signature, which is executed in the digital camera. As shown in FIG. 3, in a step S301, in the case that the photographer 103 has pressed a shutter button (not shown) of the digital camera 101, that is, has operated the shutter button of the digital camera 101, the MPU 201 controls the image pickup device 203 and the like to execute a photographing processing. As a result, the digital content 110, which is image data, is obtained. The digital content 110 is stored in the buffer memory 206. The digital content 110 is data immediately before being written into the recording medium 209 as a file. Here, it is assumed that the file format is Joint Photographic Experts Group (JPEG).

In a step S302, the MPU 201 controls the digital signature generating unit 213 to calculate the hash value based on the digital content 110. As described above, the metadata storage area 112 in which the camera digital signature is stored is excluded from the calculation target of the hash value. In the present embodiment, it is assumed that the camera digital signature is written as XMP metadata of JPEG. At this time, it is assumed that the portion excluded from the hash value calculation is the entire APP1 segment in which XMP data exists. APP1 segment data includes a data size of the APP1 segment. This data size is a value that will change when the camera digital signature is added as the XMP metadata later. Since there is a risk that in the case that this is included in the hash calculation target, the verification of the camera digital signature will fail, the entire APP1 segment including the XMP data is excluded from the hash calculation target. The format for embedding the camera digital signature is not limited to Extensible Metadata Platform (XMP). For example, in the case of a JPEG file, it is possible to use the JPEG Universal Metadata Box Format (JUMBF) data storage format, and the camera digital signature may be embedded in the JUMBF format, and a segment including the JUMBF data may be excluded from the hash value calculation target. In addition, it is also possible to perform the hash calculation by the MPU 201, but since the amount of calculation required is relatively large, it is preferable to perform the hash calculation by the digital signature generating unit 213 including a hash calculation function in the security chip 211. As a result, it becomes possible to perform the hash calculation at high speed, and therefore, it is possible to prevent or suppress a decrease in the processing speed of the entire camera function.

In a step S303, the MPU 201 controls the digital signature generating unit 213 to read out the camera private key from the camera private key storing unit 212 and encrypt the hash value with the camera private key to generate the camera digital signature.

In a step S304, the MPU 201 creates an area in the buffer memory 206 for storing the camera digital signature. The method of creating the area for storing the camera digital signature is not particularly limited, and may be, for example, a method of shifting the address of the data following the portion where the camera digital signature is inserted. Alternatively, the method of creating the area for storing the camera digital signature may be a method of reserving a memory in the buffer memory 206 that is large enough to store the digital content 110 which newly includes the camera digital signature, and copying the data. Alternatively, the method of creating the area for storing the camera digital signature may be a method of dividing the units managed on the buffer memory 206 into segments such as APP1, APP2, and image areas in advance, thereby reducing the data movement and the amount of data copying when inserting the XMP data later.

In a step S305, the MPU 201 stores (writes) the camera digital signature in (into) the area that has been created in the step S304. An example of the camera digital signature is <XMP:CameraSignData> byte sequence of camera digital signature data </XMP:CameraSignData>.

In a step S306, the MPU 201 controls the recording medium I/F 208 to write, into the recording medium 209, the digital content 110 in the camera digital signature assigned state.

In a step S307, the MPU 201 controls the communication unit 210 to transmit, to the content receiving server 102, the digital content 110 in the camera digital signature assigned state. It should be noted that it is assumed that for this communication, the FTP is used. It should be noted that it is preferable that the digital camera 101 includes a UI section (not shown) for setting a URL or an IP address of the content receiving server 102 that is the transmission destination when the digital camera 101 transmits the digital content 110. In addition, when performing FTP communication, user authentication based on the user account and a password is performed. It is preferable that the digital camera 101 includes a UI section (not shown) for inputting the user account and the password when the user authentication is performed.

### <Configuration of content receiving server>

FIG. 4 is a block diagram that shows a configuration of the content receiving server. The content receiving server 102 shown in FIG. 4, which is configured with computer(s), is configured with at least one computer, and is preferably configured with a plurality of computers. As a result, it is possible to improve the processing speed of the content receiving server 102. The content receiving server 102 includes the data receiving unit 401, the digital signature verifying unit 402, the camera database 403, and the digital signature generating unit 404. In addition, the content receiving server 102 includes a server private key storing unit 405, a public key certificate storing unit 406, the image storage 407, a UI unit 408, and a server public key storing unit 409. The data receiving unit 401 includes a network protocol communication function. In the present embodiment, the data receiving unit 401 is configured to use the FTP to receive files from the digital camera 101, and therefore includes at least an FTP communication function. When performing FTP communication, the user authentication based on the user account and the password is performed.

The digital signature verifying unit 402 performs the verification of the authenticity of the camera digital signature and the server digital signature. The digital signature verifying unit 402 receives the digital content 110 from the data receiving unit 401. Then, the digital signature verifying unit 402 obtains the camera serial number within the Exif data of the digital content 110, and the camera digital signature data from the XMP area. The digital signature verifying unit 402 uses the camera serial number as a key, that is, based on the camera serial number, obtains the camera public key from the camera database 403, and performs the verification of the camera digital signature. It should be noted that in the case that the verification of the camera digital signature has failed, it is considered that the digital content 110 has been falsified or that the digital content 110 is a content which has been transmitted from computer equipment or the like that is capable of performing FTP transmission and has stolen the identity of the digital camera 101. In this case, it is preferable to delete the digital content 110. The digital signature verifying unit 402 receives the digital content 110 requested for verification from the UI unit 408. Then, the digital content 110 obtains the server digital signature data from the XMP area. The digital content 110 obtains the server public key from the server public key storing unit 409 and performs the verification of the server digital signature. The camera database 403 manages the camera serial number of each digital camera 101 and the camera public key in a manner that the camera serial number of each digital camera 101 is in association with the camera public key.

The digital signature generating unit 404 obtains the server private key from the server private key storing unit 405 and generates the server digital signature. As for the target of the hash calculation for generating the server digital signature, similar to the case of generating the camera digital signature, it is preferable to exclude the APP1 segment including the XMP data from the digital content 110. It should be noted that the camera digital signature is added to the end of the digital content 110 and is included in the target of the hash calculation. The digital signature generating unit 404 adds the server digital signature to the digital content 110. The server digital signature, for example, <XMP:ServerSignData01> byte sequence of server digital signature data </XMP:ServerSignData01> is assigned (added) to the position after the <XMP:CameraSignData> tag that includes the camera digital signature. The "01" at the end of the character string "ServerSignData" in the above XML tag has been added because the server digital signature will be added multiple times in the future. In the digital content 110 that has been stored in the image storage 407, before the validity period of the public key certificate of the key that has been used for the server digital signature and the validity period of the time stamp certificate described above expire, re-signing is performed with a new key. The character string of the XML tag when performing re-signing is, for example, <XMP:ServerSignData02> byte sequence of server digital signature data </XMP:ServerSignData02>. In this way, the number at the end of the character string "ServerSignData" is counted up from the previous signature, and a server digital signature is assigned (added) to the digital content 110. In addition, the digital signature generating unit 404 assigns the server digital signature to the digital content 110, and also assigns the public key certificate to the digital content 110. The digital signature generating unit 404 reads out the public key certificate from the public key certificate storing unit 406, and similar to the case of assigning the server digital signature, assigns (adds) <XMP:Certificate01> public key certificate data </XMP:Certificate01> to the XMP area of the digital content 110.

In the case that the validity period of the public key certificate issued for the server private key has expired, the public key certificate needs to be renewed. The server private key storing unit 405 manages the validity period, renewal, and the like of the public key certificate. It should be noted that since the server private key is also highly confidential data, it is possible to place restrictions on the server private key storing unit 405 so that only a limited number of persons in charge among server administrators can access it. In addition, the server private key storing unit 405 is able to monitor unauthorized accesses from the outside and take measures against unauthorized accesses from the outside. Similar to the server private key storing unit 405, the public key certificate storing unit 406 is able to manage the validity period of the public key certificate. In the case that the validity period of the public key certificate is approaching, the public key certificate storing unit 406 notifies the server administrator who manages the content receiving server 102 of the gist of that. In the case that the server administrator has confirmed this notification, a new server private key and a new server public key are created, and a request to issue a public key certificate is made to the CA 107. The digital content 110 in the server digital signature assigned state that the verification of the camera digital signature has been successful is stored in the image storage 407. A URL for downloading is assigned to this digital content 110. The UI unit 408 provides the content origin verifying web page 700 (see FIG. 7). The server public key storing unit 409 stores the server public key for verifying the server digital signature.

### <Example of digital signature data to be added to image data>

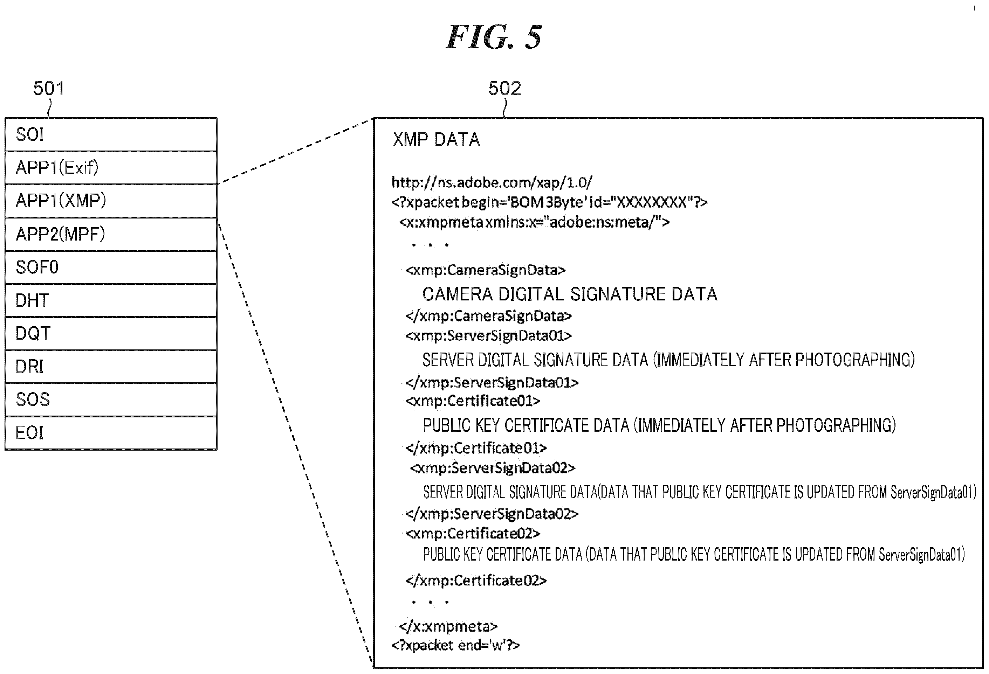

FIG. 5 is a diagram that shows an example in which a digital signature and a public key certificate are assigned to the digital content by the content receiving server. An internal structure 501 of a JPEG file shown in FIG. 5 includes XMP data 502. As XMP metadata to be added to the digital content 110, the XMP data 502 includes various kinds of data such as the camera digital signature, the server digital signature, and the public key certificate.

### <Verification by third party>

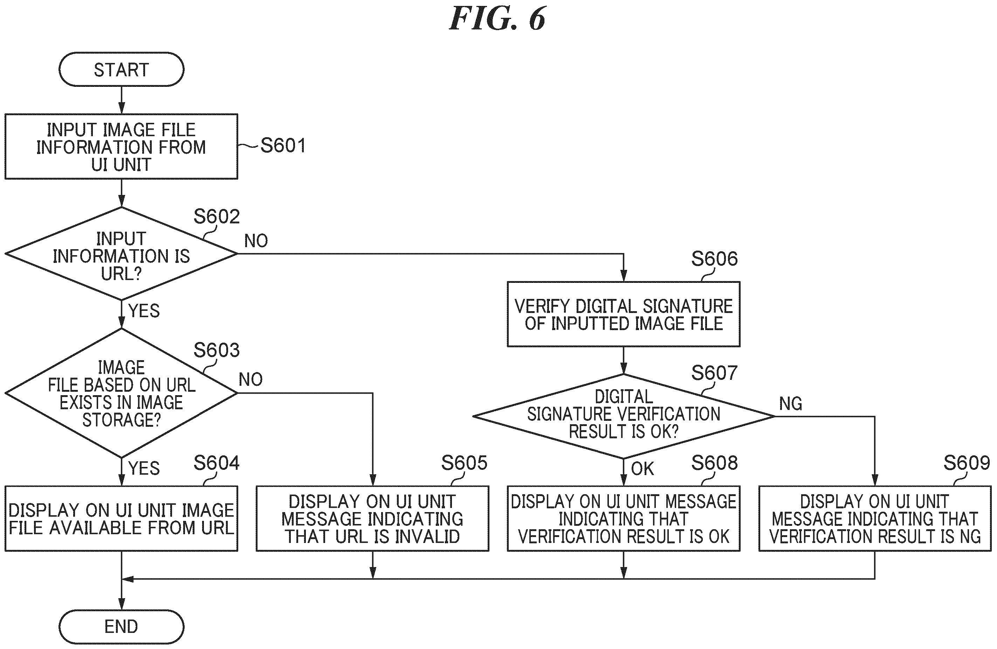

FIG. 6 is a flowchart that shows a content origin verifying processing, which verifies that a digital content posted on an SNS has not been falsified. Here, an example will be described in which the viewer 105 has obtained the download URL of the digital content 110 posted on the SNS 108 and then uses the content origin verifying web page 700 to perform the origin verification of the content. As shown in FIG. 6, in a step S601, the content receiving server 102 accepts, via the UI unit 408, an input of the digital content 110, which is the verification target from the viewer 105, or an input of the download URL of the digital content 110.

In a step S602, the content receiving server 102 determines whether or not the input information accepted in the step S601 is a URL. As a result of the determination in the step S602, in the case of being determined that the input information is a URL, the content origin verifying processing proceeds to a step S603. On the other hand, as the result of the determination in the step S602, in the case of being determined that the input information is not a URL, that is, in the case of being determined that the input information is the digital content 110 itself, the content origin verifying processing proceeds to a step S606.

In the step S603, the content receiving server 102 determines whether or not the digital content 110 is present within the image storage 407, that is, whether or not the digital content 110 is capable of being obtained from the image storage 407 (whether or not the digital content 110 is obtainable from the image storage 407), based on the input information. If the URL, which is the input information, is valid, as a result of the determination in the step S603, it is determined that the digital content 110 is obtainable from the image storage 407. In this case, the content origin verifying processing proceeds to a step S604. On the other hand, if the URL, which is the input information, is invalid, as the result of the determination in the step S603, it is determined that the digital content 110 is not obtainable from the image storage 407. In this case, the content origin verifying processing proceeds to a step S605.

In the step S604, the content receiving server 102 displays, on the UI unit 408, the photographed image of the digital content 110 that has been determined to be obtainable in the step S603. The viewer 105 is able to compare the digital content 110 displayed on the UI unit 408 with the digital content 110 posted on the SNS 108. Furthermore, based on the result of this comparison, the viewer 105 is able to confirm whether or not the photographed image of the digital content 110 photographed by the digital camera 101 has been falsified.

In the step S605, the content receiving server 102 displays, on the UI unit 408, a message indicating that the URL, which is the input information, is invalid.

In the step S606, the content receiving server 102 verifies the authenticity of the camera digital signature and the server digital signature of the digital content 110 by the digital signature verifying unit 402.

In a step S607, the content receiving server 102 determines whether or not there is a problem with the result of the verification in the step S606. As a result of the determination in the step S607, in the case of being determined that there is no problem with the verification result (the verification result is OK), the content origin verifying processing proceeds to a step S608. On the other hand, as the result of the determination in the step S607, in the case of being determined that there is a problem with the verification result (the verification result is NG), the content origin verifying processing proceeds to a step S609.

In the step S608, the content receiving server 102 displays, on the UI unit 408, a message indicating that it has been determined that there is no problem with the verification result. As a result, the viewer 105 is able to ascertain that there is no problem with the verification result.

In the step S609, the content receiving server 102 displays, on the UI unit 408, a message indicating that it has been determined that there is a problem with the verification result. As a result, the viewer 105 is able to ascertain that there is a problem with the verification result.

### <Content origin verifying web page>

FIG. 7 is a diagram that shows an example of the content origin verifying web page. The content origin verifying web page 700 shown in FIG. 7 is a web page used when certifying (verifying) the origin of the digital content 110. The content origin verifying web page 700 includes the UI section 701, the UI section 702, and a button UI section 703. The UI section 701 is a section where the digital content 110, which is the verification target of the presence or absence of falsification, is capable of being designated by drag and drop. When the digital content 110 is dropped into the UI section 701, digital signature verifying processing (a camera digital signature verifying processing and a server digital signature verifying processing) for the digital content 110 are performed, and the results of the verification are superimposed and displayed on the content origin verifying web page 700. The UI section 702 is a section where the download URL of the digital content 110 that has been stored in the image storage 407 of the content receiving server 102 and is the verification target of the presence or absence of falsification is able to be inputted. When the button UI section 703 is press-operated in a state in which the download URL has been inputted into the UI section 702, a search for the digital content 110 that has been stored in the image storage 407 is started. As a result, the photographed image of the digital content 110 is superimposed and displayed on the content origin verifying web page 700. It should be noted that in the case that the button UI section 703 has been press-operated in a state in which a URL different from the download URL has been inputted into the UI section 702, a message indicating, for example, "the inputted URL is invalid" is superimposed and displayed on the content origin verifying web page 700.

Although the preferred embodiment of the present invention has been described above, the present invention is not limited to the above-described preferred embodiment, and various modifications and changes are possible within the scope of the gist of the present invention. The present invention is also able to be realized by supplying a program that realizes one or more of the functions of the above-described preferred embodiment to a system or an apparatus via a network or a recording medium, and having one or more processors of a computer in the system or the apparatus read out the program and then execute the program. In addition, the present invention is also able to be realized by a circuit (for example, an application specific integrated circuit (an ASIC)) that realizes one or more functions. In addition, in the present embodiment, the digital signature verifying unit 402 has been configured to be able to execute the camera digital signature verifying processing and the server digital signature verifying processing, but is not limited to this. For example, the digital signature verifying unit 402 may be configured to be divided into a first verifying unit that executes the camera digital signature verifying processing and a second verifying unit that executes the server digital signature verifying processing. In addition, the camera public key may be made confidential within the content receiving server 102 without being transmitted to the content receiving server 102. In this case, for example, the serial number of the digital camera 101 and the camera public key are linked to each other and are managed on the side of the content receiving server 102. As a result, the content receiving server 102 is able to obtain the serial number of the digital camera 101 from the digital content 110 and obtain the camera public key corresponding to the serial number.

In addition, in the content origin verifying system 1000, for example, the content receiving server 102 (hereinafter, simply referred to as "a server") may be located outside Japan, and the digital camera 101, which is a terminal device, may be located within Japan. Even in this case, respective files and/or data are capable of being transmitted from the server to the terminal device, and the terminal device is able to receive the respective files and/or the data. In this way, even in the case that the server is located outside Japan, the transmission and reception of the respective files and/or the data in the present system is performed integrally. Furthermore, since the present system functions by the terminal device located within Japan receiving the respective files and/or the data, the transmission and reception is capable of being considered to have been performed within Japan. In addition, in the present system, for example, even in the case that the server is located outside Japan and the terminal device is located within Japan, the terminal device is able to perform the main functions of the present system and the effects of those functions is capable of being realized within Japan. For example, even in the case that the server is located outside Japan, if the terminal device constituting the present system is located within Japan, it is possible to use the present system within Japan by using the terminal device. Furthermore, the use of the present system may affect economic benefits, for example, to the patent owner.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

This application claims the benefit of Japanese Patent Application No. 2023-205196, filed on December 5, 2023, which is hereby incorporated by reference herein in its entirety.

## Claims

1. A content origin verifying system (1000) that comprises a content generating apparatus (101), which generates a digital content, and a server (102), which is communicably connected to the content generating apparatus, and that verifies an origin of the digital content, wherein
the content generating apparatus comprises
a first digital signature generating unit (213) configured to generate a first digital signature associated with the digital content based on a first private key; and
a transmitting unit (210) configured to transmit the digital content and the first digital signature to the server,
the server comprises
at least one processor; and
a memory coupled to the processor storing instructions that, when executed by the processor, cause the processor to function as:
a receiving unit (401) that receives the digital content and the first digital signature that have been transmitted from the transmitting unit;
a verifying unit (402) that verifies authenticity of the first digital signature received by the receiving unit; and
a second digital signature generating unit (404) that, in a case of being verified that the first digital signature is true as a result of the verification performed by the verifying unit, generates a second digital signature associated with the digital content received by the receiving unit based on a second private key, and
the second private key is paired with a public key for which a public key certificate is issued by a certification authority and which is capable of being used to verify authenticity of the second digital signature.

2. The content origin verifying system according to claim 1, wherein the first digital signature generating unit generates the first digital signature based on the first private key and a hash value that has been obtained from the digital content.

3. The content origin verifying system according to claim 1 or 2, wherein
the second digital signature generating unit generates the second digital signature based on the second private key and a hash value that has been obtained from the digital content.

4. The content origin verifying system according to any one of claims 1 to 3, wherein
the digital content includes a storage area that stores metadata,
the first digital signature generating unit stores the first digital signature in the storage area as the metadata, and
the second digital signature generating unit stores the second digital signature and the public key certificate in the storage area as the metadata, respectively.

5. The content origin verifying system according to any one of claims 1 to 4, wherein
in a case that the public key paired with the second private key is set to a second public key, the first private key is paired with a first public key that is capable of being used to verify the authenticity of the first digital signature, and
the server comprises a storing unit (403) configured to store an identifier capable of identifying the content generating apparatus and the first public key in association with each other.

6. The content origin verifying system according to claim 5, wherein
the digital content includes a storage area that stores metadata,
the identifier is also stored in the digital content as the metadata, and
the verifying unit obtains the identifier from the digital content received by the receiving unit, obtains the first public key from the storing unit based on the identifier, and uses the first public key to verify the authenticity of the first digital signature.

7. The content origin verifying system according to claim 6, wherein
the verifying unit uses the first public key to decrypt the first digital signature to obtain a hash value, and also obtains a hash value from the digital content received by the receiving unit, and verifies the authenticity of the first digital signature based on whether or not the respective hash values match each other; and wherein optionally
in a case that the respective hash values match each other, the verifying unit verifies that the first digital signature is true.

8. The content origin verifying system according to any one of claims 1 to 7, wherein
the verifying unit is capable of verifying the authenticity of the second digital signature; and wherein optionally
in a case that the public key paired with the second private key is set to a second public key, the verifying unit uses the second public key to decrypt the second digital signature to obtain a hash value, and also obtains a hash value from the digital content received by the receiving unit, and verifies the authenticity of the second digital signature based on whether or not the respective hash values match each other, and wherein optionally
in a case that the respective hash values match each other, the verifying unit verifies that the second digital signature is true.

9. The content origin verifying system according to claim 1, wherein
the content generating apparatus comprises a tamper-resistant storing unit (212) configured to store the first private key.

10. The content origin verifying system according to any one of claims 1 to 9, wherein
the content generating apparatus is a digital camera (101).

11. The content origin verifying system according to any one of claims 1 to 10, wherein
the server comprises a tamper-resistant storing unit (405) configured to store the second private key.

12. The content origin verifying system according to any one of claims 1 to 11, wherein
the server is configured to be capable of providing an image that is capable of being used to verify the origin of the digital content, or an address of the image.

13. The content origin verifying system according to any one of claims 1 to 12, wherein
the server is configured with at least one computer.

14. A control method for controlling a content origin verifying system that comprises a content generating apparatus, which generates a digital content, and a server, which is communicably connected to the content generating apparatus, and that verifies an origin of the digital content,
the control method comprising:
steps executed by the content generating apparatus; and
steps executed by the server, and
wherein the steps executed by the content generating apparatus include
a first digital signature generating step of generating a first digital signature associated with the digital content based on a first private key; and
a transmitting step of transmitting the digital content and the first digital signature to the server,
the steps executed by the server include
a receiving step of receiving the digital content and the first digital signature that have been transmitted from the transmitting step;
a verifying step of verifying authenticity of the first digital signature received in the receiving step; and
a second digital signature generating step of, in a case of being verified that the first digital signature is true as a result of the verification performed in the verifying step, generating a second digital signature associated with the digital content received in the receiving step based on a second private key, and
the second private key is paired with a public key for which a public key certificate is issued by a certification authority and which is capable of being used to verify authenticity of the second digital signature.

15. A non-transitory computer-readable storage medium storing a program for causing a computer to execute a control method for controlling a content origin verifying system that comprises a content generating apparatus, which generates a digital content, and a server, which is communicably connected to the content generating apparatus, and that verifies an origin of the digital content,
the control method comprising:
steps executed by the content generating apparatus; and
steps executed by the server, and
wherein the steps executed by the content generating apparatus include
a first digital signature generating step of generating a first digital signature associated with the digital content based on a first private key; and
a transmitting step of transmitting the digital content and the first digital signature to the server,
the steps executed by the server include
a receiving step of receiving the digital content and the first digital signature that have been transmitted from the transmitting step;
a verifying step of verifying authenticity of the first digital signature received in the receiving step; and
a second digital signature generating step of, in a case of being verified that the first digital signature is true as a result of the verification performed in the verifying step, generating a second digital signature associated with the digital content received in the receiving step based on a second private key, and
the second private key is paired with a public key for which a public key certificate is issued by a certification authority and which is capable of being used to verify authenticity of the second digital signature.
